(19) Europäisches Patentamt
European Patent Office
Office européen des brevets

(11) Numéro de publication : **0 362 052 B1**

(12)

# FASCICULE DE BREVET EUROPEEN

(45) Date de publication du fascicule du brevet :
30.10.91 Bulletin 91/44

(51) Int. Cl.⁵ : **F02K 9/78**, F02K 7/16,
F02K 7/18

(21) Numéro de dépôt : 89402637.6

(22) Date de dépôt : 27.09.89

(54) **Structure de tuyère pour propulseur combiné turbo-stato-fusée.**

(30) Priorité : 28.09.88 FR 8812646

(43) Date de publication de la demande :
04.04.90 Bulletin 90/14

(45) Mention de la délivrance du brevet :
30.10.91 Bulletin 91/44

(84) Etats contractants désignés :
DE FR GB IT

(56) Documents cités :
FR-A- 1 280 852
FR-A- 2 434 273
FR-A- 2 568 316
GB-A- 2 205 360
US-A- 2 933 886
US-A- 3 192 712
US-A- 3 374 631
FLIGHT INTERNATIONAL, 7 décembre 1985,
page 47, Londres, GB

(73) Titulaire : SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)

(72) Inventeur : Labatut, Josiane, Marie-Françoise
5, rue Pierre Brossolette
F-91330 Yerres (FR)
Inventeur : Marlin, François, Marie, Paul
64 Bd Aristide Briand
F-77000 Melun (FR)
Inventeur : Mazeaud, Georges
Les Rives de l'Yerres Bâtiment B3
F-91330 Yerres (FR)
Inventeur : Mirville, François, Jean-Pierre
3, rue de la Contrescarpe
F-77000 Melun (FR)

(74) Mandataire : Moinat, François et al
S.N.E.C.M.A. Service des Brevets Boîte
Postale 81
F-91003 Evry Cédex (FR)

## Description

La présente invention est relative à une structure de tuyère pour un propulseur combiné turbo-stato-fusée dont la veine annulaire d'éjection des gaz en modes turboréacteur et statoréacteur, entoure un moteur-fusée axial et débouche dans la tuyère d'éjection dudit moteur-fusée.

Le but de tels propulseurs est de pousser un avion depuis le décollage jusqu'aux vitesses hypersoniques en lui donnant à tout instant du vol les meilleurs performances, c'est à dire en réalisant les meilleurs compromis poussées/masse, poussée/surface frontale, grande impulsion spécifique.

Pour atteindre ces objectifs, on a réalisé un propulseur utilisant pour combustibles l'hydrogène liquide et l'oxygène liquide et utilisant trois modes de fonctionnement.

Du démarrage et jusqu'à un nombre de Mach de 5 et 6, de l'altitude 0 jusqu'à environ 20 km le propulseur fonctionne en mode turbo expander ou bien turbo fusée (dans le cas d'un propulseur à générateur de gaz) les gaz d'échappement de la turbine, riches en hydrogène étant injectés dans la veine d'air, préalablement comprimé par le compresseur, pour y être brûlés et éjectés dans une tuyère convergente-divergente.

De Mach 5 à Mach 7, et à une altitude de 20 à 35 km, le propulseur fonctionne en mode statoréacteur, l'air pénétrant dans la veine n'étant alors pas comprimé en dehors de la simple compression dynamique dans l'entrée d'air, le compresseur mis en autorotation ayant un rapport de pression proche de l'unité.

Dans le cas d'un circuit expander, le carburant injecté dans la veine est d'une part de l'hydrogène issu directement du circuit régénératif (échangeur de chaleur sur paroi de tuyère), d'autre part de l'hydrogène issu de ce même circuit qui a ensuite été détendu dans la turbine de turbopompe LH2 du circuit hydraulique. Dans le cas d'un circuit à générateur de gaz, les gaz injectés dans la chambre de combustion du statoréacteur sont constitués par l'hydrogène directement issu du circuit régénératif et par les gaz de combustion du générateur de gaz, après utilisation partielle de l'énergie de ces gaz pour l'entraînement des turbopompes à LH2 et LOx.

Enfin, au delà de Mach 7 et de 35 km d'altitude où une propulsion aérobie à combustion subsonique n'est plus performante, le propulseur passe en mode fusée où la chambre de combustion disposée dans la veine annulaire n'est plus alimentée et où la totalité des gaz de propulsion de l'avion sont issus d'un moteur-fusée disposé axialement.

Pour atteindre un bon compromis poussée/surface frontale, une bonne solution consiste à réaliser un propulseur dont la turbine à ergols est disposée à l'intérieur d'un corps central qui est entouré par une veine annulaire comportant une manche d'entrée d'air, le compresseur entraîné par la turbine précitée et une chambre de combustion pour les modes de fonctionnement turbo et stato.

Les gaz d'éjection de la chambre de combustion assurent la propulsion de l'avion dans ces deux modes de fonctionnement en étant éjectés dans une tuyère convergente-divergente.

Une telle structure de tuyère est connue des documents US-A-3192712 et Flight International, 7 décembre 1985, page 47, Londres, GB.

La présente invention a pour but de réaliser une structure de tuyère telle que la partie aval divergente de la tuyère convergente-divergente des modes turbo et stato soit commune avec la partie aval de la tuyère du moteur-fusée, afin de réduire l'encombrement axial et radial du propulseur.

L'invention a également pour but de réaliser une structure de tuyère du genre précité qui soit réversible puisque l'intérêt des avions ou navettes mûs par de tels propulseurs, est de pouvoir revenir au sol par ses propres moyens et en utilisant ses modes de propulsion stato et turbo au retour des missions qu'il accomplit hors de l'atmosphère terrestre. On connaît déjà par FR-A-2434273 et FR-A-2568316 des tuyères déployables pour moteurs-fusées dont l'inconvénient est soit l'irréversibilité, soit l'encombrement.

L'invention a également pour but de réaliser un dispositif dans lequel la section de col de la tuyère convergente-divergente pour les modes turbo et stato soit réglable pour être ajustable au mieux aux conditions de propulsion propres à chacun des modes turbo et stato.

L'invention a donc pour objet un propulseur combiné turbo-stato-fusée tel que décrit ci-dessus et dans lequel la tuyère du propulseur comporte une première section divergente fixe située juste en aval du moteur fusée, une seconde section divergente pouvant être escamotée et remplacée par des moyens mobiles formant avec le carter externe un col convergent-divergent à section variable pour les gaz provenant de la veine annulaire en mode turbo ou stato, la seconde section étant suivie d'une troisième section divergente fixe formant tuyère divergente pour les trois modes de propulsion turbo, stato et fusée.

Selon une caractéristique de l'invention, les moyens mobiles formant le col convergent-divergent sont constitués par une première virole cylindrique, mobile axialement vers l'aval et en aval de laquelle sont accrochés des volets mobiles.

Selon un mode de réalisation préféré de l'invention la première virole cylindrique est mobile en translation axiale au moyen d'au moins un premier vérin à vis sur la tige duquel elle est fixée, ledit vérin étant parallèle à l'axe du propulseur et ayant sa tige orientée vers l'aval.

En outre, un second vérin a son corps solidaire de la tête du premier vérin et de la première virole cylindrique. Il est disposé parallèlement à l'axe longitudinal du propulseur et orienté vers l'aval et sa tige peut entraîner en translation axiale une structure intermédiaire mobile à l'aval de laquelle est fixée la seconde section divergente escamotable de la tuyère.

L'invention sera plus complètement décrite au regard des planches de dessins annexées parmi lesquelles:
— la figure 1 montre une coupe longitudinale d'un propulseur combiné comportant une structure de tuyère réversible selon la définition de la présente invention ;
— la figure 2 montre à titre d'exemple un circuit d'alimentation du type expander utilisable avec la structure du propulseur de la figure 1 ;
— la figure 3 montre en demi-coupe longitudinale le dispositif de tuyère représenté en mode turbo propulsion ;
— la figure 4 est une demi-coupe similaire, vue en mode stato propulsion :
— la figure 5 est une vue similaire en mode de propulsion fusée.

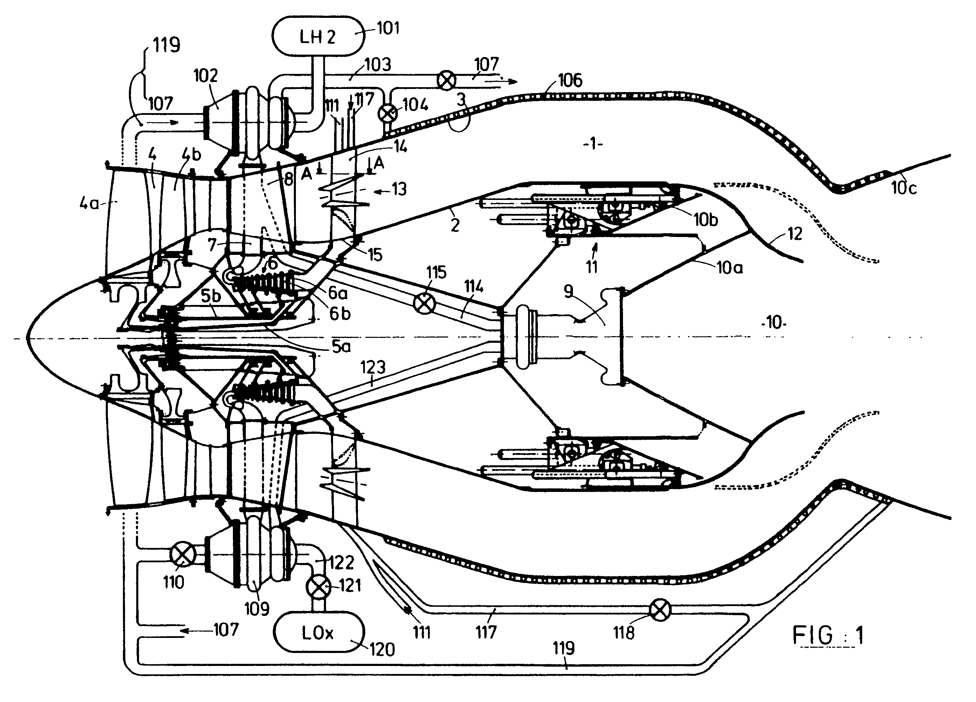

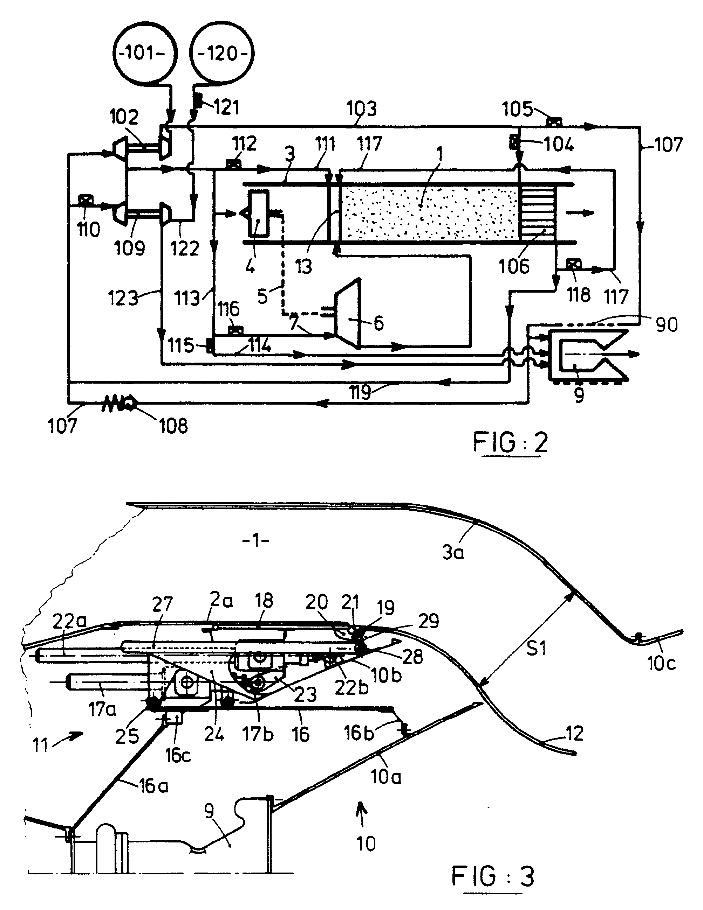

A la figure 1 a été représenté un propulseur combiné turbo-stato-fusée conforme aux objectifs de la présente invention et qui en inclut les perfectionnements. L'environnement externe du propulseur (circuits d'alimentation) a été représenté pour un cycle d'alimentation "expander" correspondant à la figure 2 à des fins d'exemplification. L'adaptation à un circuit "à générateur de gaz" ne modifie en rien la structure interne du propulseur, seules les alimentations étant modifiées.

Le propulseur comporte une veine annulaire 1 formée entre un corps central 2 et un carter externe 3. En amont de la veine est disposé un compresseur d'air 4 ici formé de deux étages contrarotatifs 4a, 4b reliés par des arbres concentriques 5a, 5b à deux rotors eux-mêmes contrarotatifs et imbriqués 6a, 6b, d'une turbine de puissance 6, disposée à l'intérieur du corps central en aval du compresseur 4.

Dans la partie aval du corps est disposé un moteur-fusée 9 dont les gaz propulsifs sont éjectés dans une tuyère 10 formée d'une première section divergente 10a, d'une seconde section 10b amovible et d'une troisième section divergente fixe 10c.

La veine annulaire 1 servant aux modes de propulsion turbo et stato débouche dans la tuyère 10 à l'emplacement qu'occupe en mode fusée la section amovible 10b. Un dispositif 11 d'excamotage de la section 10b du divergent du moteur-fusée 9, et de mise en place d'un moyen de variation de section du col de tuyère est disposé à l'intérieur du corps central 2. Il permet après escamotage de la section 10b de mettre en place dans la veine des volets 12 en forme de pétale dont la position axiale permettra de faire varier continûment la section du col de la tuyère convergente divergente dans les deux modes de fonctionnement turbo et stato.

La turbine de puissance 6 est alimentée en gaz sous pression provenant d'un circuit d'alimentation externe (qui sera détaillé plus loin en regard de la figure 2), les gaz de turbine parvenant à la partie amont de la turbine au moyen d'une tubulure d'admission 7 traversant des bras structuraux 8 qui relient et maintiennent le corps central 2 au carter externe 3.

En sortie de turbine, les gaz qui l'ont traversée sont admis dans la chambre de combustion de la veine 1 au moyen d'un dispositif d'injection 13 afin d'y être mélangés à l'air issu du compresseur 4 et brûlés en sortie du dispositif d'injection. Celui-ci est constitué de bras radiaux 14 régulièrement répartis dans la veine.

Si l'on regarde maintenant la figure 2, on a représenté un type d'alimentation en ergols compatible avec la structure de propulseur décrit à la figure 1.

A la figure 2 on a schématisé un propulseur combiné turbo-stato-fusée à cycle dit expander.

Dans ce schéma, bien que l'on ait représenté la turbine de puissance et le moteur fusée en dehors de la veine d'air, pour des raisons de commodité, il s'agit bien respectivement de la turbine 6 et de la fusée centrale 9 disposées dans le corps central 2 du propulseur de la figure 1.

Dans un propulseur à cycle expander, le seul ergol utilisé en mode stato ou turbo est l'hydrogène.

L'hydrogène liquide issu d'un réservoir de stockage 101 est pompé au moyen d'une turbopompe 102 puis est amené par une canalisation 103 et deux vannes 104, 105 d'une part à un échangeur de chaleur 106 disposé sur la paroi de la chambre de combustion et d'autre part à une canalisation 107 qui, munie d'un clapet anti-retour 108 va alimenter les turbines de deux turbopompes, l'une 102 déjà citée et l'autre 109 destinée à l'alimentation en oxygène du moteur-fusée 9. Une vanne 110 permet d'isoler la turbopompe 109 du circuit quand besoin est, c'est à dire en modes turbo et stato.

En sortie des turbines des turbopompes 102 et 109, l'hydrogène qui vient d'être détendu et qui a donc utilisé une partie de son énergie, est séparé en deux circuits dont l'un, 111, commandé par une vanne 112 autorise l'injection d'hydrogène dans la cavité 14f des bras radiaux et 19b, 20b des anneaux du dispositif d'injection 13, et dont l'autre 113 se ramifie lui même en deux parties 114 et 7 commandées chacune par une vanne 115, 116. Le circuit 7 alimente la turbine de puissance 6 tandis que le circuit 114 alimentera en mode fusée le moteur fusée 9. La sortie de la turbine 6 est reliée à la partie interne du dispositif d'injection 13 au travers de la virole 15. Si l'on revient à l'échangeur de chaleur 106, on voit que l'hydrogène en sortie dudit échangeur, où il a pré-

3

levé des calories et augmenté son enthalpie, est utilisé pour alimenter deux circuits, l'un 117 commandé par une vanne 118 permet l'injection en mode stato de l'hydrogène dans les cavités 14f des bras radiaux, et 19b, 20b des anneaux collecteurs du dispositif d'injection 13, tandis que l'autre circuit 119 va rejoindre la tubulure 107 en aval du clapet anti-retour 108 pour apporter l'énergie nécessaire à l'entraînement de la turbopompe 102 en modes turbo et stato. En mode fusée, les turbopompes 102 et 109 sont entraînées par l'hydrogène circulant dans la tubulure 107 qui a prélevé des calories dans un échangeur de chaleur 90 situé sur la paroi de la chambre fusée 9.

Pour finir la description du circuit d'alimentation en ergols, il faut ajouter qu'il comporte un réservoir d'oxygène 120 qui peut être isolé par une vanne 121 et dont la sortie 122 est branchée sur la pompe de la turbopompe 109 dont le débit de sortie alimente, par une tubulure 123 en mode fusée seulement, le moteur-fusée 9.

Les différents modes de fonctionnement sont conditionnés par l'ouverture/fermeture des différentes vannes ci-dessus mentionnées afin d'alimenter ou d'interrompre telle ou telle autre partie du circuit, ce qui peut être résumé par le tableau suivant dans lequel les différents modes de fonctionnement sont indiqués avec en regard, l'état d'ouverture (0) / fermeture (F) de chacune des vannes :

| MODE DE FONCTIONNEMENT | VANNES | | | | | | | |
|---|---|---|---|---|---|---|---|---|
| | 104 | 105 | 110 | 112 | 115 | 116 | 118 | 121 |
| TURBO-EXPANDER | O | F | F | F | F | O | O | F |
| STATO-REACTEUR | O | F | F | O | F | F | O | F |
| FUSEE | F | O | O | F | O | F | F | O |

Le fonctionnement d'un tel propulseur est le suivant :

Le démarrage est assuré par un démarreur à poudre (non représenté) qui entraîne la turbine de turbopompe à LH$_2$ 102. En mode turboexpander, la vanne 110 étant fermée, la turbopompe à LOx 109 est arrêtée. La vanne 105 étant également fermée, la totalité du débit d'hydrogène passe dans l'échangeur de chaleur 106.

LH$_2$, comprimé par la turbopompe 102 et vaporisé dans l'échangeur 106 entraîne la turbopompe 102 puis la turbine 6 du moteur, (laquelle entraîne le compresseur 4) et enfin est injecté dans la chambre de combustion par l'intérieur des bras radiaux 14. Simultanément la vanne 118 étant ouverte, la partie radialement externe des bras 14 est alimentée en hydrogène directement depuis la sortie de l'échangeur de chaleur 106, ce qui permet d'assurer un bon refroidissement du bord de fuite des bras 14 et des anneaux collecteurs 19 et 20.

Le passage en mode statoréacteur s'effectue en isolant la turbine 6 par fermeture de la vanne 116 et ouverture simultanée de la vanne 112 de façon à ce que l'hydrogène en sortie de turbine de la turbopompe 102 soit injecté au moyen de la canalisation 111, des bras 14 et des anneaux collecteurs. Les vannes 104,118 étant ouvertes, la partie du débit d'hydrogène sorti de l'échangeur 106, qui n'est pas utilisé dans la turbopompe 102 est injectée directement au moyen de la canalisation 117 dans les bras 14 du dispositif d'injection 13. La totalité de l'injection d'hydrogène en mode stato est donc assurée depuis le bord externe de la veine par les bras d'injection 14.

Le passage en mode fusée s'effectue par fermeture de la vanne 104 et ouverture simultanée des vannes 105, 110, 115 et 121. L'hydrogène issu de la pompe 102 alimente par 107 les turbines des deux turbopompes 102 et 109, puis par 113 et 114 est injecté dans la chambre du moteur fusée 9.

L'oxygène pompé par 109 est amené par la canalisation 123 à la chambre du moteur-fusée 9.

Dans ce dernier mode de fonctionnement, la turbine 6 n'est pas alimentée et le compresseur 4 n'est plus alimenté en air, l'entrée d'air ayant été fermée. Les bras radiaux d'injection 14 ne sont alors plus alimentés du tout.

Pour assurer le réglage de la section du col de la tuyère annulaire en modes turbo et stato, et son obturation en mode moteur-fusée les moyens mobiles globalement référencés 11 sur la figure 1 vont être décrits plus en détail en regard des figures 3 à 5.

4

A l'intérieur de la partie aval cylindrique 2a du corps central 2 sont disposés des rails longitudinaux fixes 16 tenus sur la partie amont du moteur fusée 9 par un anneau 16c porté par une bride conique 16a et sur la première section 10a de tuyère divergente par une bride conique 16b.

Entre la virole cylindrique 2a et les rails 16 sont disposés plusieurs ensembles 11, par exemple trois répartis à 120° autour du corps central ou comme le montre la figure 1, quatre répartis à 90°.

Chaque ensemble 11 comporte un premier vérin à vis 17 disposé longitudinalement dont le corps 17a est fixé sur la partie amont du rail 16 et dont la tige 17b, orientée vers l'aval est solidaire d'une virole cylindrique mobile 18 apte à coulisser en translation axiale sous la virole 2a contre laquelle elle est disposée.

Sur le bord aval de la virole coulissante 18 sont articulés (au moyen de pattes 19 coopérant avec des chapes 20 par des axes 21) des volets mobiles 12 en forme de pétales possédant une double courbure d'abord tournée vers l'axe du propulseur dans la partie amont des volets puis tournée radialement vers l'extérieur du propulseur dans la partie aval des volets.

L'ensemble formé par la virole cylindrique 18 et les volets 12, mobile en translation axiale au moyen du vérin 17, constitue, avec la partie aval convergente 3a du carter externe 3 qui se raccorde sur la section 10c divergente de la tuyère, les moyens de formation du col convergent-divergent et de variation de la section de ce dit col.

Un second vérin à vis 22, dont le corps 22a est solidaire d'une pièce de liaison 23 entre la tige 17b du premier vérin 17 et la virole 18, est disposé parallèlement à l'axe longitudinal du propulseur avec sa tige 22b orientée vers l'aval. Sur la tête du second vérin 22 est articulée une structure intermédiaire 24 mobile en translation axiale et possédant des galets 25 de roulement sur le rail fixe 16. Sur la partie aval de la structure mobile 24 est soudée une virole conique formant la seconde section divergente 10b de la tuyère 10, et c'est sur une chape 26 de cette virole 10b qu'est articulée la tige 22b du second vérin 22.

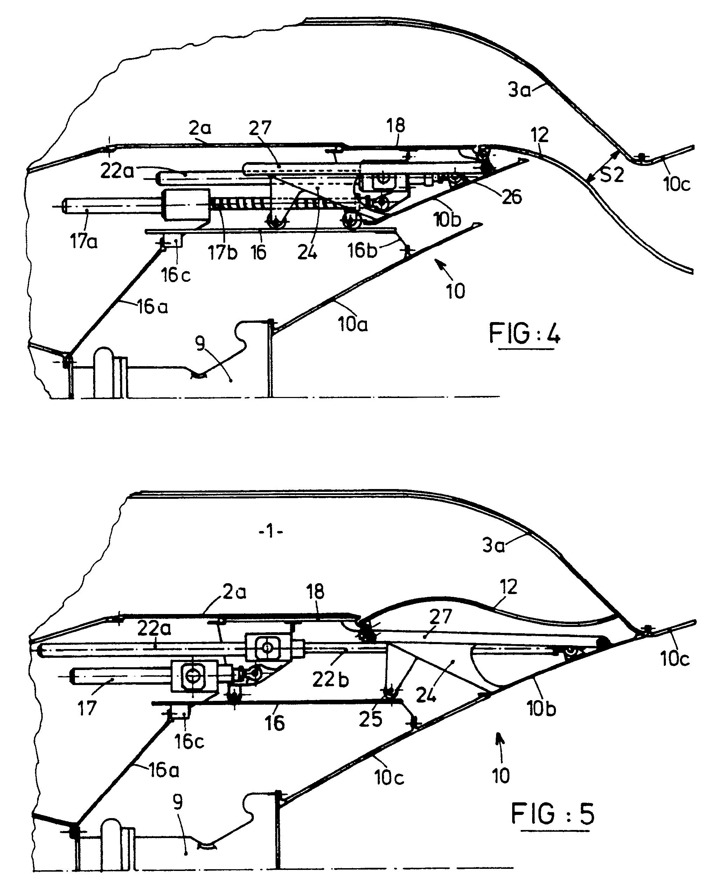

Sur sa partie radialement externe, la structure mobile 24 comporte deux rails de guidage 27 longitudinaux, avec lesquels coopèrent des galets de roulement 28 portés par une biellette 29 articulée sur l'axe de liaison 21 entre la virole 18 et les volets 12, pour permettre le coulissement des galets 28 dans les rails 27. De cette façon lors de l'extension de la tige du second vérin 22, qui amène vers l'aval la section divergente 10b de la tuyère, alors que le premier vérin 17 est en position tige rentrée, les volets s'escamotent vers l'extérieur pour laisser libre passage à la virole conique 10b (figure 5). Cette disposition permet de reconstituer la tuyère divergente 10 lors du passage du propulseur en mode fusée, l'éjection de gaz dans la veine annulaire ayant cessé à cet instant.

Les séquences de fonctionnement sont alors les suivantes :

En mode de fonctionnement turboréacteur au sol (figure 3), le premier et le second vérin 17 et 22 sont en position rétractée et la seconde section de tuyère divergente 10b est escamotée, les volets 12 étant en position amont dans laquelle ils définissent une section S1 de col de tuyère annulaire maximale pour l'éjection des gaz du turboréacteur.

Le vérin 17 est ensuite déployé progressivement lors de l'accélération en mode turbo puis en mode stato. A la fin du mode statoréacteur (figure 4), le premier vérin 17 est en position complètement étendue et le second 22 rétracté, la première virole cylindrique mobile 18 étant en position aval et les volets 12 en position aval dans laquelle ils définissent une section S2 de col de tuyère minimale pour l'éjection des gaz du statoréacteur.

En mode fusée, (figure 5) le premier vérin 17 est en position rétractée et le second vérin 22 étendu, les volets 12 étant escamotés tandis que la seconde section 10b de tuyère divergente est en position aval où elle obture la veine annulaire et assure la continuité de la tuyère 10 entre les première et troisième sections fixes 10a et 10C pour permettre l'éjection des gaz du moteur-fusée 9.

On voit sur les figures 3 et 4 qu'en jouant sur la position du vérin 17, on peut faire passer la section de col S de la tuyère annulaire de sa valeur maximale $S_1$ à sa valeur minimale $S_2$ de façon continue et réversible lors de l'accélération (passage du mode de propulsion turbo au mode stato et réciproquement).

On voit également que l'escamotage des volets et donc l'obturation de la veine et la formation de la tuyère fusée sont réversibles ce qui permet de passer indifféremment du mode stato au mode fusée et réciproquement.

Bien que l'invention ait été explicitée appliquée à un propulseur à cycle expander, elle peut tout autant être appliquée à un propulseur dont la turbine est entraînée par un générateur de gaz externe et/ou possède un réchauffeur de gaz.

L'invention peut également être appliquée sans limitation à un propulseur dont l'architecture du compresseur et de la turbine serait différente de celle ici représentée.

L'invention s'applique donc indifféremment à tout type de propulseurs utilisant successivement les trois modes de propulseur turbo, stato et fusée et dont la veine d'éjection en modes turbo et stato est annulaire et entoure le moteur-fusée.

## Revendications

1. Propulseur combiné turbo-stato-fusée comportant un moteur-fusée axial (9) débitant des gaz de propulsion dans une tuyère divergente (10), ledit moteur-fusée étant disposé à la partie aval d'un corps central (2) qui contient en outre une turbine de puissance (6) débitant des gaz dans un dispositif d'injection disposé dans une veine annulaire (1) entourant le corps central et limitée par un carter externe (3) et comprenant en amont un compresseur d'air (4) entraîné par la turbine (6), l'air comprimé étant mélangé aux gaz issus du dispositif d'injection pour être brûlés dans une chambre de combustion, les produits de combustion s'échappant vers l'aval dans une tuyère annulaire convergente divergente, caractérisé en ce que la tuyère du propulseur comporte une première section divergente fixe (10a) située juste en aval du moteur-fusée (9), une seconde section divergente (10b) pouvant être escamotée et remplacée par des moyens mobiles (12, 18) formant avec le carter externe (3a) un col convergent-divergent à section S variable pour les gaz provenant de la veine annulaire en mode turbo ou stato, la seconde section (10b) étant suivie d'une troisième section divergente (10c) fixe formant tuyère divergente pour les trois modes de propulsion turbo, stato et fusée.

2. Propulseur combiné selon la revendication 1, caractérisé en ce que les moyens mobiles formant le col convergent-divergent sont constitués par une première virole cylindrique (18), mobile axialement vers l'aval et en aval de laquelle sont accrochés des volets mobiles (12).

3. Propulseur combiné selon la revendication 2, caractérisé en ce que les volets mobiles (12) possèdent de l'amont vers l'aval une double courbure d'abord radialement vers l'intérieur puis radialement vers l'extérieur.

4. Propulseur combiné selon l'une des revendications 2 ou 3, caractérisé en ce que les volets (12) sont accrochés au bord aval de la première virole cylindrique (18) au moyen de pattes (19) articulées par un axe (21) sur des chapes (20) de ladite virole.

5. Propulseur combiné selon l'une quelconque des revendications 2 à 4, caractérisé en ce que la première virole cylindrique (18) est mobile en translation axiale au moyen d'au moins un premier vérin à vis (17) sur la tige (17b) duquel elle est fixée, ledit vérin (17) étant parallèle à l'axe du propulseur et ayant sa tige (17b) orientée vers l'aval.

6. Propulseur combiné selon la revendication 5, caractérisé en ce que le corps (17a) du premier vérin (17) est solidaire de la partie amont d'un rail longitudinal (16) fixe et interne au corps central.

7. Propulseur combiné selon l'une des revendications 5 ou 6, caractérisé en ce qu'un second vérin (22) a son corps (22a) solidaire de la tête (17b) du premier vérin et de la première virole cylindrique (18), ledit second vérin (22) étant disposé parallèlement à l'axe longitudinal du propulseur et orienté vers l'aval, la tige (22b) du second vérin étant apte à entraîner en translation axiale une structure intermédiaire mobile (24) à l'aval de laquelle est fixée la seconde section divergente (10b) escamotable de la tuyère.

8. Propulseur combiné selon la revendication 7, caractérisé en ce que la structure intermédiaire mobile (24) comporte deux rails longitudinaux (27) de guidage coopérant avec des galets de roulement (28) portés par une biellette (29) articulée sur l'axe (21) de fixation des volets (12), lesdits galets étant aptes à coulisser dans les rails (27) lors de l'extension de la tige du second vérin (22) pour escamoter les volets (12) formant le col convergent-divergent de la veine annulaire au moment de la mise en position de la seconde section divergente (10b) de tuyère (10) lors du passage du propulseur en mode fusée.

9. Propulseur combiné selon l'une quelconque des revendications 7 ou 8 caractérisé en ce qu'en mode fonctionnement turboréacteur le second vérin (22) est en position rétractée et en ce que la seconde section de tuyère divergente (10b) est escamotée, les volets (12) étant dans la position qui définit la section (S1) de col de tuyère associée au cas de vol considéré pour l'éjection des gaz du turboréacteur.

10. Propulseur combiné selon l'une quelconque des revendications 7 à 9, caractérisé en ce que en fin de mode statoréacteur, le premier vérin (17) est en position étendue et le second rétracté (22), la première virole cylindrique mobile (18) étant en position aval et les volets (12) étant en position aval définissant la section (S2) de col de tuyère minimale pour l'éjection des gaz du statoréacteur.

11. Propulseur combiné selon l'une quelconque des revendications 7 à 10, caractérisé en ce qu'en mode fusée, le premier vérin (17) est en position rétractée et le second (22) étendu, les volets (12) étant escamotés et la seconde section (10b) de tuyère divergente assurant la continuité de la tuyère fusée (10) entre les première et troisième sections fixes (10a, 10c).

## Claims

1. Combined turboramjet-rocket propulsion unit comprising an axial rocket motor (9) discharging propulsive gases into a divergent nozzle (10), the said rocket motor being placed in the rear part of a central body (2) which contains in addition a power turbine (6) discharging gases into an injection device placed in an annular duct

EP 0 362 052 B1

(1) surrounding the central body and limited by an outer casing (3) and comprising upstream an air compressor (4) driven by the turbine (6), the compressed air being mixed with the gases coming from the injection device to be burnt in a combustion chamber, the products of combustion escaping downstream in an annular convergent-divergent nozzle, characterised in that the propulsion unit nozzle duct comprises a first fixed divergent section (10a) situated just downstream of the rocket motor (9), a second divergent section (10b) capable of being retracted and replaced by mobile means (12, 18) forming with the outer casing (3a) a convergent-divergent throat with a variable cross section S for the gases emanating from the annular duct during the turbo and ramjet modes, the second section (10b) being followed by a third fixed divergent section (10c) forming a divergent nozzle for the three modes of propulsion, turbo, ramjet and rocket.

2. Combined propulsion unit in accordance with Claim 1, characterised in that the mobile means forming the convergent-divergent throat are constituted by a first cylindrical shell (18), axially mobile towards the rear and downstream of which are attached movable flaps (12).

3. Combined propulsion unit in accordance with Claim 2, characterised in that the movable flaps (12) have, from front to rear, a double curvature firstly radially towards the interior and then radially towards the exterior.

4. Combined propulsion unit in accordance with either of Claims 2 or 3, characterised in that the flaps (12) are attached to the downstream edge of the first cylindrical shell (18) by means of lugs (19) articulated by a pin (21) passing through forks (20) on the said shell.

5. Combined propulsion unit in accordance with any one of Claims 2 to 4, characterised in that the first cylindrical shell (18) is mobile in axial translation by means of at least a first screw jack (17) on the rod (17b) of which it is fixed, the said jack (17) being parallel to the axis of the propulsion unit and having its rod (17b) orientated towards the rear.

6. Combined propulsion unit in accordance with Claim 5, characterised in that the body (17a) of the first jack (17) is firmly fixed to the upstream part of a fixed longitudinal rail (16) inside the central body.

7. Combined propulsion unit in accordance with either of Claims 5 or 6, characterised in that a second jack (22) has its body (22a) firmly fixed to the head (17b) of the first jack and to the first cylindrical shell (18), the said second jack (22) being placed parallel to the longitudinal axis of the propulsion unit and orientated towards the rear, the rod (22b) of the second jack being able to drive in axial translation a movable intermediate structure (24) downstream of which is fixed a second retractable divergent section (10b) of the nozzle.

8. Combined propulsion unit in accordance with Claim 7, characterised in that the movable intermediate structure (24) comprises two longitudinal guide rails (27) operating with idler wheels (28) carried on a connecting link (29) articulated about the fixing pin (21) of the flaps (12), the said idler wheels being able to run along the rails (27) during the extending of the rod of the second jack (22) to retract the flaps (12) forming the convergent-divergent throat of the annular nozzle at the moment of the second divergent section (10b) of the nozzle (10) being put into position during the transition of the propulsion unit to rocket mode.

9. Combined propulsion unit in accordance with either of Claims 7 or 8 characterised in that when in the turbojet mode of operation, the second jack (22) is in the retracted position and in that the second section of the divergent nozzle (10b) is retracted, the flaps (12) being in the position which defines the cross section (S1) of the throat of the nozzle which is suited to the ejection of the turbojet gases for the type of flight in question.

10. Combined propulsion unit in accordance with any of Claims 7 to 9, characterised in that at the end of a ramjet phase of operation, the first jack (17) is in the extended position and the second (22) is retracted, the first movable shell (18) being in the downstream position and the flaps (12) being in the downstream position defining the minimum cross section (S2) of the throat of the nozzle for the ejection of the ramjet gases.

11. Combined propulsion unit in accordance with any of Claims 7 to 10, characterised in that in the rocket mode, the first jack (17) is in the retracted position and the second (22) is extended, the flaps (12) being retracted and the second section (10b) of the divergent nozzle ensuring the continuity of the rocket nozzle (10), between the first and third fixed sections (10a, 10c).

**Patentansprüche**

1. Kombinierter Turbo-Staustrahl-Raketenantrieb mit einem axialen Raketenmotor (9), der Antriebsgase in eine divergierende Düse (10) liefert, wobei dieser Raketenmotor in dem stromabwärtigen Teil eines zentralen Körpers (2) angeordnet ist, der außerdem eine Leistungsturbine (6) aufweist, die Gase in eine Einspritzvorrichtung liefert, die in einem den Hauptkörper umgebenden und von einem äußeren Gehäuse (3) begrenzten ringförmigen Strömungskanal (1) angeordnet ist, der auf der stromaufwärtigen Seite einen von der Turbine (6) angetriebenen Luftverdichter (4) enthält, wobei die verdichtete Luft mit den von der Einspritzvorrichtung ausgegebenen Gasen gemischt und in einer Brennkammer verbrannt wird, wobei die Verbrennungsprodukte in stromabwärtiger Richtung in eine eingezogene Ringdüse entweichen, dadurch gekennzeichnet, daß die Düse

7

des Antriebs einen ersten festen divergierenden Abschnitt (10a) umfaßt, der unmittelbar stromabwärts des Raketenmotors (9) angeordnet ist, ferner einen zweiten divergierenden Abschnitt (10b), der versenkt und durch bewegbare Mittel (12, 18) ersetzt werden kann, die mit dem äußeren Gehäuse (3a) einen eingezogenen Hals mit variablem Querschnitt S für die Gase bilden, die im Turbo- oder Staustrahlbetrieb von dem ringförmigen Strömungskanal kommen, und daß auf den zweiten Abschnitt (10b) ein divergierender dritter fester Abschnitt (10c) folgt, der eine divergierende Düse für die drei Antriebsarten, d.h. den Turbo-, Staustrahl- und Raketenantrieb, bildet.

2. Kombinierter Antrieb nach Anspruch 1, dadurch gekennzeichnet, daß die bewegbaren Mittel, die den eingezogenen Hals bilden, aus einem ersten zylindrischen Ring (18) bestehen, der axial in stromabwärtiger Richtung bewegbar ist und an dessen stromabwärtiger Seite bewegbare Klappen (12) befestigt sind.

3. Kombinierter Antrieb nach Anspruch 2, dadurch gekennzeichnet, daß die bewegbaren Klappen (12) von der stromaufwärtigen zur stromabwärtigen Seite eine doppelte Krümmung, nämlich zunächst eine radial nach innen gerichtete und dann eine radial nach außen gerichtete Krümmung, haben.

4. Kombinierter Antrieb nach einem der Ansprüche 2 oder 3, dadurch gekennzeichnet, daß die Klappen (12) an dem stromabwärtigen Rand des ersten zylindrischen Rings (18) mit Hilfe von Lappen (19) befestigt sind, die durch eine Achse (21) an Bügeln (20) des Rings angelenkt sind.

5. Kombinierter Antrieb nach einem der Ansprüche 2 bis 4, dadurch gekennzeichnet, daß der erste zylindrische Ring (18) mit Hilfe wenigstens einer ersten Schraubenwinde (17) axial verschiebbar ist, an deren Stange (17b) der Ring befestigt ist, wobei diese Schraubenwinde (17) parallel zur Achse des Antriebs angeordnet ist und ihre Stange (17b) in stromabwärtiger Richtung weist.

6. Kombinierter Antrieb nach Anspruch 5, dadurch gekennzeichnet, daß der Körper (17a) der ersten Schraubenwinde (17) fest mit dem stromaufwärtigen Teil einer im Innern des zentralen Körpers angeordneten festen Längsschiene (16) verbunden ist.

7. Kombinierter Antrieb nach einem der Ansprüche 5 oder 6, dadurch gekennzeichnet, daß eine zweite Winde (22) vorgesehen ist, deren Körper (22a) mit dem Kopf (17b) der ersten Winde und dem ersten zylindrischen Ring (18) fest verbunden ist und die parallel zur Längachse des Antriebs angeordnet und in stromabwärtiger Richtung orientiert ist, wobei die Stange (22b) der zweiten Winde eine bewegbare Zwischenkonstruktion (24), auf deren stromabwärtiger Seite der versenkbare zweite divergierende Abschnitt (10b) der Düse befestigt, ist, mit einer axialen Translationsbewegung beaufschlagen kann.

8. Kombinierter Antrieb nach Anspruch 7, dadurch gekennzeichnet, daß die bewegbare Zwischenkonstruktion (24) zwei longitudinale Führungsschienen (27) aufweist, die mit Wälzrollen (28) zusammenwirken, die von einem mit der Befestigungsachse (21) der Klappen (12) gelenkig verbundenen Schwinghebel (29) getragen sind, wobei die Wälzrollen in den Führungsschienen (27) gleiten, wenn die Stange der zweiten Winde (22) ausgefahren wird, um die den eingezogenen Hals des ringförmigen Strömungskanals in dem Zeitpunkt zu versenken, in dem der zweite divergierende Abschnitt (10b) der Düse (10) beim Übergang des Antriebs in den Raketenbetrieb in Position gebracht wird.

9. Kombinierter Antrieb nach einem der Ansprüche 7 oder 8, dadurch gekennzeichnet, daß beim Betrieb als Turbostrahltriebwerk die zweite Winde (22) ihre eingefahrene Stellung einnimmt und der zweite divergierende Abschnitt (10b) der Düse versenkt ist, wobei die Klappen (12) sich in der Position befinden, die den dem betrachteten Flugfall zugeordneten Querschnitt (S1) des Düsenhalses für den Ausstoß der Gase begrenzt.

10. Kombinierter Antrieb nach einem der Ansprüche 7 bis 9, dadurch gekennzeichnet, daß beim Betrieb als Staustrahlantrieb die erste Winde (17) ihre ausgefahrene Stellung einnimmt, die zweite Winde (22) ihre eingefahrene Stellung einnimmt, der erste bewegbare zylindrische Ring (18) sich in der stromabwärtigen Position befindet und die Klappen (12) sich in stromabwärtiger Position befinden, wobei sie den minimalen Düsenhalsquerschnitt (S2) für den Ausstoß der Gase des Staustrahltriebwerks begrenzen.

11. Kombinierter Antrieb nach einem der Ansprüche 7 bis 10, dadurch gekennzeichnet, daß beim Betrieb als Raketenantrieb die erste Winde ihre eingefahrene Stellung einnimmt und die zweite Winde (22) ihre ausgefahrene Stellung einnimmt, die Klappen (12) versenkt sind und der zweite divergierende Abschnitt (10b) der Düse die Kontinuität der Raketendüse (10) zwischen dem ersten und dem dritten festen Abschnitt (10a bzw. 10c) gewährleistet.

FIG : 1

FIG : 2

FIG : 3

FIG : 4

FIG : 5